# EUROPÄISCHE PATENTSCHRIFT

(11) **EP 1 181 433 B1**
(45) Veröffentlichungstag und Bekanntmachung des Hinweises auf die Patenterteilung: **23.11.2005**
(21) Anmeldenummer: 00947764.7
(22) Anmeldetag: 29.05.2000
(51) Int. Cl.: E21B 7/00, E21B 7/20, F24J 3/08

(54) **BOHRER, BOHRVERFAHREN SOWIE HEISSWASSERGEWINNUNG**
DRILL, DRILLING METHOD AND EXTRACTION OF HOT WATER
TREPAN, PROCEDE DE FORAGE ET EXTRACTION D'EAU CHAUDE

(30) Priorität: 28.05.1999 DE 19924432; 02.09.1999 DE 19941741
(43) Veröffentlichungstag der Anmeldung: 27.02.2002
(73) Patentinhaber: Limbeck, Achim, 53894 Mechernich (DE)
(72) Erfinder: Limbeck, Achim, 53894 Mechernich (DE)
(74) Vertreter: Castell, Klaus
(86) Internationale Anmeldenummer: PCT/DE2000/001707
(87) Internationale Veröffentlichungsnummer: WO 2000/073617

(56) Entgegenhaltungen:
- BE-A- 421 995
- CH-A- 658 513
- DE-A- 3 735 304
- FR-A- 2 498 307
- US-A- 4 616 719

## Beschreibung

Die Erfindung betrifft ein Bohrverfahren. Dementsprechend betrifft die Erfindung ein Bohrverfahren, welches mit einem Bohrkopf durchgeführt werden kann. Die Erfindung richtet sich insbesondere auf eine kostengünstige Gewinnung von Energie aus Erdwärme. Hierzu sind, so nicht besondere geologische Vorraussetzungen vorliegen, verhältnismäßig tiefe Bohrungen notwendig. Da jedoch mit einer Bohrung nur lediglich verhältnismäßig geringe Energiemengen gewonnen werden können, ist man diesbezüglich auf dezentrale Bohrungen, die bis zu 800 m Tiefe erreichen können sollten, angewiesen.

Zwar gibt es für derartige Bohrtiefen verschiedenste Bohrverfahren, die jedoch allesamt sehr aufwendig und somit kostspielig sind, so dass diese sich für eine dezentrale Heißwassergewinnung nicht eignen, da hierfür sehr viele Bohrungen notwendig sind. Aus der US 4,616,719 ist ein elektromotorisch angetriebener Bohrkopf bekannt, der jedoch die für derartige Bohrungen notwendigen Tiefen nicht erreichen kann.

Als Lösung schlägt die Erfindung einerseits einen Bohrer mit einem Bohrkopf, der wenigstens eine Bohrkrone umfasst, vor, bei welchem der Bohrkopf einen Antrieb für die Bohrkrone aufweist.

Bei einer derartigen Anordnung ist der Bohrkopf in der Lage, die notwendigen Bohr- bzw. Verdrängungskräfte für den Bohrvorgang selbst aufzubringen. Insofern kann bei einer derartigen Anordnung auf ein Bohrgestänge an sich verzichtet werden, welches den Bohrer überirdisch antreibt. Darüber hinaus lassen sich durch eine derartige Anordnung auch die von dem Antrieb aufzubringenden Kräfte reduzieren, da das Bohrgestänge eben nicht mitbewegt werden muss.

Bei einer derartigen Anordnung ist es möglich, den Bohrkopf mittels einer auf ihm lastenden Wassersäule einzutreiben, wie die Erfindung darüber hinaus vorschlägt, da lediglich Rohre oder ähnliche Einrichtungen vorgesehen werden brauchen, die eine derartige Wassersäule bereitstellen. Weil ein sich drehendes Bohrgestänge nicht vorgesehen ist, ist es erstmals möglich, derart einfach einen Bohrkopf einzutreiben.

Insbesondere ist es möglich, dass die Wassersäule unmittelbar in einer Verschalung steht, die mit dem Bohrkopf abgedichtet verbunden ist, so dass die Wassersäule über den gesamten Verschalungsdurchmesser auf dem Bohrkopf lastet.

Vorzugsweise weist der Bohrkopf einen elektromotorischen Antrieb auf, welcher verhältnismäßig kostengünstig ist und auf sehr einfache Weise geregelt werden kann. Insbesondere kann ein derartiger Elektromotor lastenabhängig gesteuert werden, so dass er sich veränderten Bohranforderungen, die durch unterschiedliche Erdschichten an den Bohrkopf gestellt werden, leicht anpassen lässt. Eine derartige Motorsteuerung kann unmittelbar in dem Bohrkopf selbst vorgesehen sein, so dass die Bohrkopfregelung unmittelbar vor Ort erfolgt. Darüber hinaus kann die Bohrkopfsteuerung Mittel zum Bestimmen einer ankommenden elektrischen Leistung aufweisen, die über eine Datenleitung einer überirdisch vorgesehenen Stromquelle ein entsprechendes Anforderungsprofil vermitteln. Durch eine derartige Einrichtung lassen sich insbesondere durch lange Kabelwege bedingte Verluste entsprechend kompensieren, so dass dem Bohrkopf in jeder Tiefe die notwendige elektrische Leistung zur Verfügung steht.

Vorzugsweise umfasst der Bohrkopf zwei Bohrkronen, die derart angeordnet sind, dass sich deren Drehmomente wenigstens teilweise kompensieren. Als baulich besonders einfache Maßnahme bietet sich hierfür an, dass die beiden Bohrkronen gegensinnig drehen. Es versteht sich allerdings, dass auch andere konstruktive Möglichkeiten diesbezüglich ausgenutzt werden können. Insbesondere können Abtragwinkel, Flächen sowie Material bzw. Arbeitsflächen der Bohrkronen nach dieser Maßgabe gewählt bzw. angepasst werden. Es versteht sich, dass eine derartige Maßnahme auch unabhängig von den übrigen Merkmalen des erfindungsgemäßen Bohrers vorteilhaft ist. Sie kann insbesondere sowohl bei verdrängenden Bohrern als auch bei Kernbohrern zur Anwendung kommen.

Bei verdrängenden Bohrern können beispielsweise zwei Kegelmantelflächen mit gegenläufigem Rotationssinn geführt werden. So kann beispielsweise eine Kegelspitze rechtssinnig und eine unmittelbar daran anschließende Kegelmantelfläche linkssinnig drehen bzw. umgekehrt.

Bei einem Kernbohrer können zwei koaxial angeordnete, gegensinnig rotierende Kernbohrer vorgesehen sein.

Alternativ bzw. kumulativ zu der Drehmomentkompensation kann der Bohrkopf eine Axialführung zur Aufnahme von Drehmomenten, die durch die Bohrkrone bzw. die Bohrkronen bedingt sind, aufweisen. Eine derartige Axialführung kann beispielsweise durch radial auskragende Nocken oder Schienen bzw. durch sonstige Maßnahmen, die einer Kompensation von Drehmomenten dienen können, gewährleistet werden. Vorzugweise ist eine derartige Axialführung in radiale Richtung anpassbar ausgebildet, da - je nach Bodeneigenschaft - eine derartige Axialführung über den eigentlichen Bohrdurchmesser hinaus ragt und dann ein weiteres Eintreiben des Bohrers verhindern würde. In einer derartigen Situation wäre die Axialführung radial wieder einzuziehen, so dass die notwendigen ins Erdinnere gerichteten Kräfte eintreibend wirken können.

Darüber hinaus kann der Bohrkopf einen axialen Antrieb aufweisen, der diesen entlang seiner Bohrrichtung treibt. Je nach Erfordernissen, kann der Antrieb auch dafür ausgelegt sein, den Bohrkopf entgegen seiner Bohrrichtung anzutreiben, um gegebenenfalls besonderen Hindernissen gerecht zu werden. Der axiale Antrieb kann insbesondere auch die Axialführung bedingen bzw. umgekehrt. Dem entsprechend ist es vorteilhaft, wenn der Axialantrieb entsprechend in radiale Richtung anpassbar ausgebildet ist.

Ein derartiger Axialantrieb kann insbesondere ergänzend zu der Eintreibkraft der Wassersäule zur Anwendung kommen. Hierbei kann er beispielsweise bei geringen Bohrtiefen, bei welchen die Wassersäule noch kein ausreichend Gewicht aufweist bzw. bei verhältnismäßig harten Erdschichten zur Anwendung kommen. Es versteht sich, dass ein derartiger axialer Antrieb auch unabhängig von den übrigen Merkmalen des erfindungsgemäßen Bohrkopfes vorteilhaft dazu dienen kann, einen Bohrkopf anzutreiben. Dies gilt insbesondere für Anordnungen, bei welchen auf ein treibendes Bohrgestänge verzichtet werden soll.

Vorzugsweise steht die Wassersäule in einer Verschalung des Bohrers, welche mit dem Bohrkopf abgedichtet verbunden ist. Auf diese Weise kann das in der Wassersäule befindliche Wasser unmittelbar im Bohrkopf als Bohr- bzw. Spülwasser zur Verfügung gestellt werden. Darüber hinaus kann dieses Wasser auch zur Schmierung des Bohrkopfes und der darin befindlichen Lager genutzt werden. Eine derartige Anordnung baut besonders einfach. Insbesondere kann die Verschalung zur Aufnahme eventueller Drehmomente genutzt werden, welche die Verschalung dann wegen ihrer verhältnismäßig großen Kontaktfläche zu dem Erdreich unmittelbar an dieses abgeben kann. Bei einer derartigen Anordnung kann somit - je nach Größe der zu erwartenden Drehmomente - auf eine Axialführung verzichtet werden.

Dadurch dass die Verschalung mit dem Bohrkopf verbunden ist und die Wassersäule auf dem Bohrkopf lastet, zieht dieser die Verschalung mit nach unten. Eine derartige Anordnung ermöglicht es, je nach Größe des Bohrlochs bzw. je nach Größe der auftretenden Kräfte, auf einen Axialantrieb des Bohrkopfes zu verzichten, so dass der Bohrer sozusagen von selbst in sein Bohrloch eingetrieben wird.

Andererseits ist es auch möglich, dass die Verschalung nicht hinter dem Bohrkopf in das Bohrloch gezogen wird, sondern dass die Verschalung jeweils dem Bohrkopf folgend unmittelbar hinter diesen aufgebaut wird. Dieses kann beispielsweise durch Verspritzen eines geeigneten und ausreichend schnell bindenden Bindemittels, welches dann zu der Verschalung erstarrt, erfolgen. Hierbei können sowohl Kunststoffe als auch Beton, insbesondere nassbindender Beton, zur Anwendung kommen.

Vorzugsweise sind in dem Bohrkopf Öffnungen vorgesehen, die mit einer Rückleitung verbunden sind, so dass eingebrachtes Bohr- bzw. Spülwasser nach oben abgeführt werden kann. Dieses erfolgt vorzugsweise durch eine Rückleitung.

Der vorbeschriebene Bohrkopf bzw. der vorbeschriebene Bohrer sowie das vorbeschriebene Bohrverfahren eignen sich insbesondere für Bohrungen, die unter 1000 mm Durchmesser liegen. Insbesondere eignen sich diese für Bohrungen unter 500 mm bzw. 200 mm, da bei derartigen Bohrungen die auftretenden Kräfte überraschenderweise derart gut beherrschbar sind, dass mit einem elektromotorischen Antrieb gearbeitet werden kann. Darüber hinaus können bei einer derartigen, verhältnismäßig kleinen Bohrung die Drehmomente überraschend gut kompensiert werden.

Vorzugsweise wird der Bohrkopf nach dem Bohren zur Wassersäule hin abgedichtet. Auf diese Weise entsteht ein zum Erdreich hin geschlossener abgedichteter, wasserbefüllter Raum, der ohne weiteres zur Heißwassergewinnung genutzt werden kann. Diese bestimmungsgemäße Nutzung kann dadurch erleichtert werden, dass die Rückleitung für das Bohr- bzw. Spülwasser thermisch isoliert ausgebildet ist, so dass erwärmtes Wasser durch diese Rückleitung ohne weiteres nach oben geführt werden kann. Hierbei sollten die Durchmesser der Verschalung sowie der isolierten Steigleitung derart aufeinander abgestimmt sein, dass eine ausreichende Temperatur des Wassers in der Steigleitung erreicht wird. Ein auf diese Weise gewonnenes Heißwasser kann unmittelbar - insbesondere ohne eine Filterung - in einen Warmwasserkreislauf einer Heizung eingespeist werden, da es keinerlei Verunreinigungen durch das Erdreich aufweist. Da darüber hinaus dieses System auch nach Außen hin geschlossen ist, kann auf sehr komplexe Abdichtmaßnahmen, beispielsweise beim Durchbrechen einer Lehmschicht, verzichtet werden.

Weitere Vorteile, Ziele und Eigenschaften vorliegender Erfindung werden anhand der Beschreibung anliegender Zeichnung näher erläutert, in welcher beispielhaft ein Bohrkopf bzw. ein Bohrer, eine Bohranlage zur Durchführung des erfindungsgemäßen Verfahrens sowie eine erfindungsgemäße Heißwassergewinnung dargestellt sind. In der Zeichnung zeigen:
- Figur 1: einen erfindungsgemäßen Bohrkopf in perspektivischer Schemaansicht, teilweise aufgebrochen,
- Figur 2: einen durch die Bohrachse verlaufenden Schnitt durch die Bohrkopfspitze,
- Figur 3: einen Schnitt durch die Darstellung nach Fig. 2 entlang der Linie III-III,
- Figur 4: eine schematische Darstellung einer überirdischen Anordnung zum Betrieb des Bohrkopfes nach Fign. 1 bis 3 und
- Figur 5: eine schematische Darstellung einer erfindungsgemäßen Heißwassergewinnung für eine Heizungsanlage.

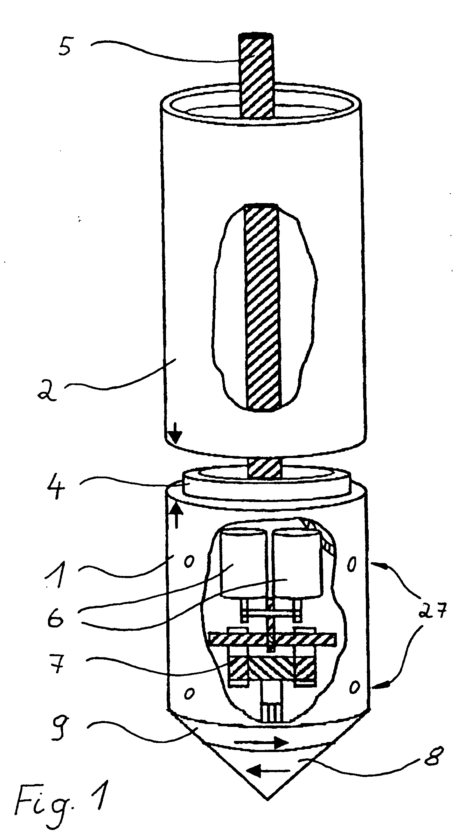

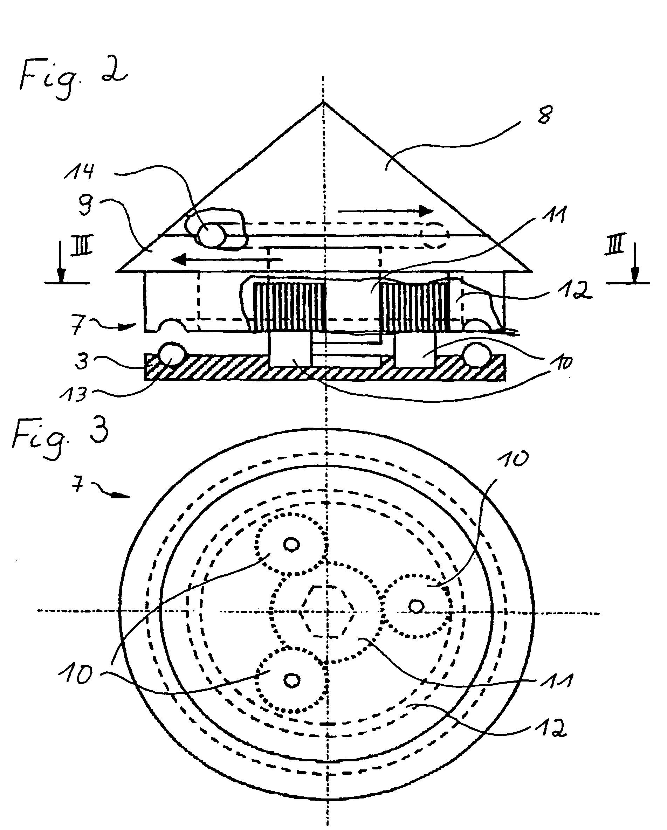

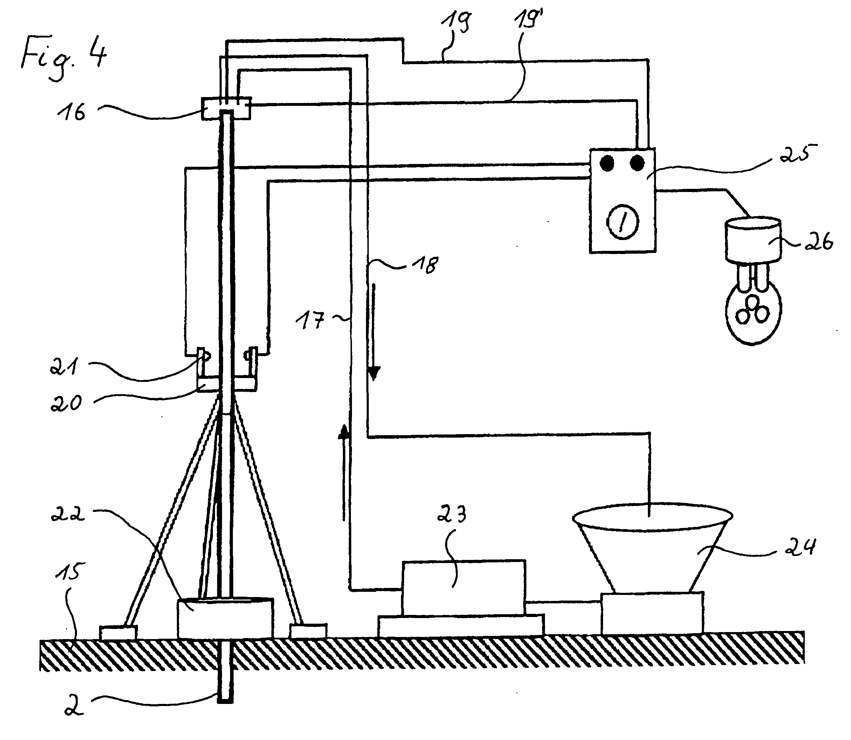

Der in Fig. 1 schematisch dargestellte Bohrer umfasst einen Bohrkopf 1, an welchem eine Verschalung 2 wasserdicht befestigt ist (die Verbindung ist in Fig. 1 als Explosionsdarstellung getrennt). Der Bohrkopf ist an seiner Spitze durch eine Abschlussplatte 3 verschlossen, Auf diese Weise entsteht ein Hohlraum, in welchem eine Wassersäule 4 (in Fig. 3 schematisch dargestellt) stehen kann, die auf der Abschlussplatte 3 lastet. Hierdurch wird der Bohrkopf und somit auch die Verschalung 2 in Bohrrichtung mit einer Kraft beaufschlagt.

Bei vorliegendem Ausführungsbeispiel sind sowohl die zylinderförmige Wandung des Bohrkopfs 1 als auch die Verschalung 2 aus Kunststoff gebildet und miteinander verklebt.

Innerhalb der Verschalung 2 ist ein Steigrohr 5 angeordnet, welches in vorliegendem Ausführungsbeispiel zur Wassersäule 4 hin thermisch isoliert ist und durch welches Wasser nach oben abgeführt werden kann. Während des Bohrens kann dieses Bohr- bzw. Spülwasser sein, während dieses bei einem späteren, installierten Wärmegewinnungsrohr Warmwasser sein kann.

In dem Bohrkopf sind mehrere Motoren 6 angeordnet, die über ein Getriebe 7 eine erste Bohrkrone 8 und eine zweite Bohrkrone 9 antreiben können.

Wie in Fign. 2 und 3 dargestellt, umfasst dieses Getriebe 7 ein Planetengetriebe mit drei Planetenrädern 10, die in der Abschlussplatte 3 gelagert sind und einerseits mit einem Sonnenrad 11 sowie andererseits mit einem Zahnkranz 12 kämmen. Hierbei ist das Sonnenrad 11 als Antriebselement genutzt und treibt die erste Bohrkrone 8 unmittelbar und die zweite Bohrkrone 9 über die Planetenräder 10 und den Zahnkranz 12 mittelbar an. Die zweite Bohrkrone 9 ist mit dem Zahnkranz 12 fest verbunden. Darüber hinaus ist der Zahnkranz 12 an der Abdeckplatte 3 über ein Kugellager 13 gelagert, während die beiden Bohrkronen 8 und 9 untereinander über ein Kugellager 14 gelagert sind.

Während des Bohrbetriebes sind sowohl die Motoren 6 als auch das Getriebe 7 von Wasser umspült und werden hierdurch sowohl gekühlt als auch geschmiert. Darüber hinaus weist der Bohrkopf 1 nicht dargestellte Austrittsöffnungen auf, über welche Wasser austreten kann. Derartige Austrittsöffnungen sind insbesondere in der Abschlussplatte 3 vorgesehen, so dass das Wasser auch zum Kühlen und Schmieren der Kugellager 13 bzw. 14 sowie der Bohrköpfe 8 und 9 genutzt werden kann. Je nach konkreter Ausführungsform können auch die Bohrköpfe Austrittsöffnungen aufweisen, so dass Bohr- bzw. Spülwasser unmittelbar durch diese nach Außen austreten kann. Darüber hinaus kann Bohr- bzw.

Spülwasser auch durch die Grenzfläche zwischen den beiden Bohrkronen 8 und 9 sowie durch die Grenzfläche zwischen dem Außenzahnkranz 12 und der Abschlussplatte 3 austreten.

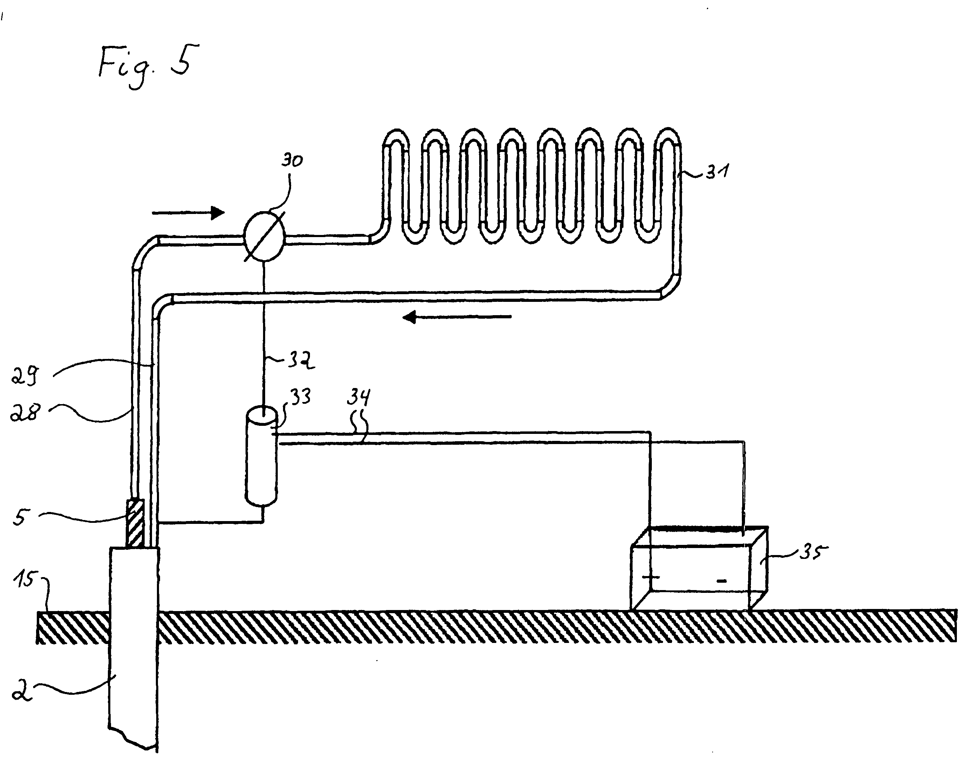

Eine Anlage, mit welcher ein in Fign. 1 bis 3 dargestellter Bohrer betrieben werden kann, ist in Fig. 4 schematisch dargestellt. Aus der Erdoberfläche 15 tritt hierbei die Verschalung 2 aus und endet in einem Steckmodul, welches entsprechende Anschlüsse für einen Wasserzu- bzw. -ablauf 17, 18 sowie eine Stromleitung 19 und eine Datenleitung 19' aufweist. Die hervorstehende Verschalung 2 wird über eine Führung 20 geführt, an welcher eine Lichtschranke 21 vorgesehen ist, die den Bohrvorgang stoppt, wenn das obere Rohrende diese Überwachung 21 erreicht hat. Nachdem der Bohrvorgang gestoppt ist, kann dann ein neues Verschalungsstück auf die Verschalung 2 aufgesetzt und mit dieser Verschalung 2 verbunden, beispielsweise verklebt, werden. Ebenso können das innere Spülrohr 5 sowie die elektrischen Leitungen zu dem Bohrkopf 1 verlängert werden. Anschließend wird das Steckmodul auf die auf diese Weise verlängerte Verschalung 2 aufgesetzt und der Bohrbetrieb kann wieder aufgenommen werden.

Damit der Bohrer nicht unvermittelt nach unten abrutschen kann, wenn er einen Hohlraum, eine Wasserkammer oder sehr leicht zu durchbrechendes Material erreicht, ist eine Bremse 22 vorgesehen. Neben dieser axialen Bremswirkung kann diese Bremse auch der Aufnahme von Drehkräften dienen, solange die Verschalung 2 nicht genügend Haftung an dem Erdreich 15 aufweist.

Zum Bohren wird über eine Spülpumpe 23 Wasser durch die Verschalung 2 nach unten gepresst. Dieses vertässt zumindest teilweise den Bohrkopf 1 durch die oben beschriebenen Öffnungen. Darüber hinaus weist der Bohrkopf noch Öffnungen 27 auf, welche zurück in die Rückleitung 5 führen, so dass das rückgeführte Spülwasser durch die Leitung 18 in einen Filter 24 gelangt und von dort über die Spülpumpe 23 wieder zum Bohren genutzt werden kann.

Darüber hinaus weist die Anordnung nach Fig. 4 eine Regler 25 auf, der sowohl die Spülpumpe 23 als auch den Bohrkopf 1 sowie die Bremse 22 betätigt und über die Rohrendenüberwachung 21, welche in vorliegendem Ausführungsbeispiel als Lichtschranke ausgestaltet ist, und die Datenleitung 20 angesteuert wird. Je nach konkreter Ausführungsform können die durch die Datenleitung 20 geführten Daten auch über die Stromzufuhr 19 gesendet werden. Als relevante Daten sind diesbezüglich insbesondere die von den Motoren 6 benötigten Stromkennwerte zu nennen.

Darüber hinaus weist die Steuerung 25 nicht dargestellte Einrichtungen auf, mit welcher wahlweise ein an dem Bohrkopf 1 vorgesehener Linearantrieb, wie beispielsweise diagonal nach außen pressbare Bolzen, welche auch einer Axialführung dienen können, angesteuert werden können.

Ist das Bohrloch tief genug ausgebohrt und die Verschalung 2 sowie die Spülleitung 5 ausreichend tief abgesenkt, so kann der Bohrvorgang beendet werden. Im Anschluß hieran wird bei vorliegendem Ausführungsbeispiel der Bohrkopf verfüllt und auf diese Weise nach außen abgedichtet. Selbiges geschieht mit den Öffnungen 27. Im Anschluß hieran wird das System aus Verschalung 2 und Rückleitung 5 gereinigt und mit Wasser befüllt. Es kann daraufhin an ein Heizungssystem angeschlossen werden. Da das System aus Verschalung 2 und Steigleitung 5 zur Erde hin abgedichtet ist, kann es unmittelbar mit einem Heizungssystem über Rohrleitungen 28 bzw. 29 verbunden werden. Dieses ermöglicht insbesondere bei kleinen Bohrlöchern - das Bohrloch bei dieser Ausführungsform weist einen Durchmesser von ca. 160 mm auf -, dass ohne eine zusätzliche Filteranlage die Erdwärme genutzt werden kann.

Über eine Regelung 30 kann der ansonsten durch eine Heizung 31 laufende Heißwasserstrom an heizfreien Tagen über eine Leitung 32 durch einen Stromerzeuger 33 geleitet werden, welcher über Anschlussleitungen 34 eine Batterie 35 speist.

## Patentansprüche

1. Bohrverfahren, bei welchem ein Bohrkopf (1) mittels einer auf ihm lastenden Wassersäule (4) eingetrieben wird.

2. Bohrverfahren nach Anspruch 1, ***dadurch gekennzeichnet, dass*** die Wassersäule (4) in einer Verschalung (2) steht, die mit dem Bohrkopf (1) abgedichtet verbunden ist.

3. Bohrverfahten, nach Anspruch 1 oder 2, ***dadurch gekennzeichnet, dass*** der Bohrkopf (1) mittels Wasser geschmiert wird.

4. Bohrverfahren nach einem der Ansprüche 1 bis 3, ***dadurch gekennzeichtnet, dass*** Bohr- bzw. Spülwasser über eine, vorzugsweise thermisch isolierte, Rückleitung (5) nach oben geführt wird.

5. Bohrverfahren nach einem der Ansprüche 1 bis 4, ***dadurch gekennzeichnet*, *dass*** der Bohrkopf (1) nach dem Bohren zur Wassersäule (4) hin abgedichtet wird.

6. Bohrverfahren nach einem der vorstehenden Ansprüche, ***dadurch gekennzeichnet*, *dass*** der Bohrkopf (1) elektromotorisch angetrieben wird.

## Claims

1. A drilling method by which a drill head (1) is pushed forward under the load of a water column (4).

2. The drilling method as set forth in claim 1, ***characterized in that*** the water column (4) is located within a casing (2) that is hermetically connected to the drill head (1).

3. The drilling method as set forth in claim 1 or 2, ***characterized in that*** the drill head (1) is water lubricated.

4. The drilling method as set forth in any one of the claims 1 through 3, ***characterized in that*** the drill or rather flush water is conducted upward through a preferably thermally insulated return pipe (5).

5. The drilling method as set forth in any one of the claims 1 through 4, ***characterized in that*** after drilling the drill head (1) is sealed against the water column (4).

6. The drilling method as set forth in any one of the afore mentioned claims, ***characterized in that*** the drill head (1) is driven by an electric motor.

## Revendications

1. Procédé de forage dans lequel on fait avancer une tête de forage (1) sous le poids d'une colonne d'eau (4).

2. Procédé de forage selon la revendication 1, ***caractérisé en ce que*** la colonne d'eau (4) se trouve dans un fourreau (2) raccordé hermétiquement à la tête de forage (1).

3. Procédé de forage selon la revendication 1 ou 2, ***caractérisé en ce que*** la tête de forage (1) est lubrifiée à l'eau.

4. Procédé de forage selon l'une quelconque des revendications 1 à 3, ***caractérisé en ce que*** l'eau de forage ou de rinçage est acheminée vers le haut dans une conduite de retour (5) de préférence isolée thermiquement.

5. Procédé de forage selon l'une quelconque des revendications 1 à 4, ***caractérisé en ce que*** la tête de forage (1) est isolée de la colonne d'eau (4) après le forage.

6. Procédé de forage selon l'une quelconque des revendications précédentes, ***caractérisé en ce que*** la tête de forage (1) est entraînée par un moteur électrique.
